# EUROPEAN PATENT APPLICATION

(11) **EP 1 961 306 A1**
(43) Date of publication of application: **27.08.2008**
(21) Application number: 06834905.9
(22) Date of filing: 18.12.2006
(51) Int. Cl.: A01N 59/20, A01N 59/26, A01P 3/00

(54) **BACTERICIDE FOR AGRICULTURAL AND HORTICULTURAL USE CONTAINING INORGANIC COPPER COMPOUND AS ACTIVE INGREDIENT**

(30) Priority: 16.12.2005 JP 2005363553
(71) Applicant: Riken, Wako-shi, Saitama 351-0198 (JP)
(72) Inventor: ARIMOTO, Yutaka, RIKEN, Wako-shi, Saitama 3510198 (JP); HAGIWARA, Akiko, TOAGOSEI CO., LTD., Tokyo 1058419 (JP); MATSUNAGA, Morikatsu, TOAGOSEI CO., LTD., Nagoya-shi, Aichi 4550027 (JP); ITO, Kenji, TOAGOSEI CO., LTD., Nagoya-shi, Aichi 4550027 (JP); KAMIYA, Daisuke, TOAGOSEI CO., LTD., Nagoya-shi, Aichi 4550027 (JP)
(74) Representative: Vossius & Partner
(86) International application number: PCT/JP2006/325193
(87) International publication number: WO 2007/069767

(57) **Abstract**

Disclosed is a fungicide for agricultural and horticultural use which is **characterized by** containing an inorganic copper compound and a polymer thickener having a sulfonyl group. This fungicide for agricultural and horticultural use exhibits higher plant disease-control effects than conventional inorganic copper-based fungicides.

## Description

### FIELD OF THE INVENTION

This invention relates to a fungicide for agricultural and horticultural use containing an inorganic copper compound as an active ingredient.

### BACKGROUND ART

In cultivation of agricultural and horticultural crops, crop quality deterioration and reduction in crop yield are caused by such as occurrence of various diseases and insect pests. In order to solve these problems, various pesticides are used.

Fungicides for agricultural and horticultural use containing inorganic copper compounds as active ingredients, having broad ranges of antibacterial spectrum and being low-priced, have been used for controlling crop diseases from a long time ago. However, they have a drawback in that they are less effective than fungicides containing as active ingredients compounds designed based on physiological and biochemical knowledge of plant pathogenic microbes. Therefore, various improvements have been made, from the view point of formulation, to the fungicides for agricultural and horticultural use containing inorganic copper compounds as active ingredients.

For example, fungicide compositions in which substances containing basic copper chloride and the like are microencapsulated with a water-insoluble macromolecular compound (see, for example, Patent Literature 1), dry flowable bactericides/fungicides (see, for example, Patent Literature 2) in which copper (II) hydroxide is supplemented with partially neutralized polyacrylic acid and a dispersant, bactericidal inorganic copper compounds, and solid pesticidal formulations containing a nonionic surfactant and a specific anionic surfactant (see, for example, Patent Literature 3), and the like, are known.
However, these fungicides for agricultural and horticultural use containing inorganic copper compounds as active ingredients are still not sufficient in terms of effect of controlling crop diseases. Therefore, development of additional techniques for improving formulations of fungicides for agricultural and horticultural use containing inorganic copper compounds as active ingredients is demanded.

Patent Literature 1: Japanese Patent No. 1685029
Patent Literature 2: Japanese Laid-open Patent Application (Kokai) No. 4-2b4012
Patent Literature 3: Japanese Laid-open Patent Application (Kokai) No. 2000-204009

### DISCLOSURE OF THE INVENTION

### Problems to Be Solved by the Invention

An object according to the present invention is to provide a fungicide for agricultural and horticultural use containing an inorganic copper compound as an active ingredient, which fungicide exhibits excellent effects of controlling crop diseases.

### Means for Solving the Problems

The present inventors discovered that a fungicide for agricultural and horticultural use containing an inorganic copper compound and a polymer thickener containing sulfonyl group exhibits higher pest control effects than the conventional inorganic copper-based fungicides, thereby completing the present invention.

That is, the present invention provides the following fungicides for agricultural and horticultural use.
1. A fungicide for agricultural and horticultural use, which comprises an inorganic copper compound and a polymer thickener having a sulfonyl group.
2. The fungicide for agricultural and horticultural use according to item 1, wherein the average molecular weight of said polymer thickener comprising a sulfonyl group is 500,000-3,000,000.
3. The fungicide for agricultural and horticultural use according to item 1 or 2, wherein a monomer of said polymer thickener comprising a sulfonyl group comprises 2-acrylamide-t-butylsulfonic acid.
4. The fungicide for agricultural and horticultural use according to any one of items 1 to 3, wherein said polymer thickener comprising a sulfonyl group is a copolymer of sodium 2-acrylamide-t-butylsulfonic acid/sodium acrylate/acrylic acid.
5. The fungicide for agricultural and horticultural use according to any one of items 1 to 4, wherein said inorganic copper compound is at least one selected from the group consisting of basic copper chloride, basic copper sulfate, basic copper carbonate, copper sulfate and copper (II) hydroxide.
6. The fungicide for agricultural and horticultural use according to item 5, wherein said inorganic copper compound is copper sulfate.
7. The fungicide for agricultural and horticultural use according to any one of items 1 to 6, further comprising polyphosphate.
8. The fungicide for agricultural and horticultural use according to any one of items 1 to 7, comprising a divalent copper compound and a polyphosphate group, wherein the amount of said polyphosphate group is more than 1 chemical equivalent and no more than 4 chemical equivalents per 1 chemical equivalent of said divalent copper compound.

### Effects of the Invention

The fungicide according to the present invention for agricultural and horticultural use has stronger plant disease-control effects than the conventional copper formulations, thereby exhibiting excellent control effects.

### Best Mode for Carrying Out the Invention

The present invention will now be described in more detail.
Examples of inorganic copper compounds which may be used in the present invention include basic copper chloride, basic copper sulfate, basic copper carbonate, copper sulfate and copper (II) hydroxide, which may either comprise crystal water or be anhydride. Inorganic copper compounds which may be used in the present invention are not limited to these

### examples.

The amount of these inorganic copper compounds to be added to the fungicide for agricultural and horticultural use is preferably 0.01-90 parts by mass, and more preferably 0.1-40 parts by mass based on 100 parts by mass of the total formulation.

The monomers used in the present invention for synthesizing the polymer thickener are monomers comprising a sulfonyl group, whose preferred examples include 2-acrylamide-t-butylsulfonic acid and/or a salt thereof. These may comprise (meth)acrylic acid or a salt thereof; (meth)acrylamide alkanesulfonic acid other than 2-acrylamide-t-butylsulfonic acid, such as acrylamide methanesulfonic acid, acrylamide ethanesulfonic acid and acrylamide butanesulfonic acid, or a salt thereof; vinyl sulfonic acid or a salt thereof; maleic anhydride, fumaric acid, itaconic acid and the like or salts thereof; acrylamide; methacrylamide; acrylate esters and the like. Especially, among the polymer thickeners used in the present invention, preferred are those obtained from monomers having a sulfonyl group and unsaturated carboxylic acid monomers, and more preferred are those obtained from 2-acrylamide-t-butylsulfonic acid and (meth)acrylic acid.

The average molecular weight of the polymer thickener used in the present invention is not restricted. For example, about 500,000-3,000,000 is preferred, and about 1,000,000-2,000,000 is more preferred. In cases where the polymer thickener used in the present invention is used after dilution with water when the molecular weight thereof is low, viscosity of the aqueous solution of the polymer thickener decreases and the solution may become less adhesive to agricultural and horticultural crops, which decreases the bactericidal effect thereof. Similarly, in cases where the molecular weight is too high, solubility of copper may be decreased by incorporation of copper ions into the polymer thickener.

For synthesis of the polymer thickener used in the present invention, methods conventionally used in polymerization reactions can be applied, said methods comprising gel polymerization method, aqueous solution polymerization method, reversed phase suspension polymerization method, reversed phase emulsion polymerization method, precipitation polymerization method and dispersion polymerization method. However, aqueous solution polymerization method is preferable, since a high-molecular weight polymer is easily obtained, and procedures for its polymerization and molecular weight adjustment are simple. The polymerization procedure may be carried out by either batch process or continuous process, specific examples of the continuous process including continuous belt polymerization method, wherein an aqueous monomer solution is subjected to polymerization continuously on a mobile belt.

The polymerization initiator used in the present invention is preferably a redox polymerization initiator and, alternatively, active energy ray such as UV light may be irradiated to an aqueous monomer solution containing a photoinitiator to cause radical polymerization. Specific examples of said polymerization initiator include alkali metal persulfate salts such as sodium persulfate, potassium persulfate; persulfate salts such as ammonium persulfate; hydrogen peroxide; organic peroxides such as cumene hydroperoxide, benzoyl peroxide, t-butyl peroxide, t-butyl hydroxyperoxide, benzoyl peroxide; and the like. Redox polymerization initiators, in which these oxidants are used in combination with reducers, can also be used, examples of which reducers comprising bisulfite salts such as sodium bisulfite, L-ascorbic acid (salts), erythorbic acid (salts), amine compounds, sodium hydrosulfite and transition metal salts such as iron salts, copper salts and cobalt salts. In addition, examples of a thermal polymerization initiator include azo compounds such as 2,2'-azobis(4-cyanovaleric acid), 2,2'-azobis[2-methyl-N-(2-hydroxyethyl)-propionamide], 2,2'-azobisisobutyronitrile, 2,2'-azobis-4-amidinopropane hydrochloric acid salt, 2,2'-azobis-2,4-dimethylvaleronitrile.

Further, the amount of said polymerization initiator to be added is adjusted depending on the type of the polymerization initiator and the composition of the polymer of interest, the polymerization degree, the viscosity and the like, and 5-10,000 ppm is conventionally used based on the total amount of the total monomer. The amount of said polymerization initiator to be added is preferably 10-5,000 ppm, and more preferably 15-3,000 ppm. The molecular weight of the obtained polymer is the weight average molecular weight measured by aqueous gel permeation chromatography (hereinafter referred to as "GPC" for short) using polyethylene oxide as the reference material.

The fungicide for agricultural and horticultural use according to the present invention preferably comprises polyphosphate groups. Examples of the polyphosphate groups used in the fungicide for agricultural and horticultural use according to the present invention include pyrophosphoric acid group, tripolyphosphoric acid group, tetrapolyphosphoric acid group, trimetaphosphoric acid group, tetrametaphosphoric acid group, hexametaphosphoric acid group and mixtures of two or more types thereof Among these, pyrophosphoric acid group, tripolyphosphoric acid group and tetrapolyphosphoric acid group are preferred. The counter ion of polyphosphoric acid group is preferably an alkali metal ion, more preferably sodium ion or potassium ion. In the present specification, there are also cases where the above described polyphosphoric acid group and its counter ion are referred to as polyphosphoric acid salt.

In cases where the fungicide for agricultural and horticultural use in the present invention comprises a divalent copper compound and polyphosphoric acid group, the amount of polyphosphoric acid group is more than 1 chemical equivalent, preferably more than 1 chemical equivalent and not more than 4 chemical equivalents based on 1 chemical equivalent of divalent copper. Crop injury tends to occur in cases where the amount of polyphosphoric acid group is 1 chemical equivalent or less based on 1 chemical equivalent of divalent copper, and plant disease-control effects tend to decrease in cases where the amount of polyphosphoric acid group is more than 4 chemical equivalents.
Chemical equivalent will now be illustrated by using the chemical formula below.

H₄P₂O₇ + 4NaOH → Na₄P₂O₇ + 4H₂O

One mol of pyrophosphoric acid is reacted with 4 mol of sodium hydroxide to produce 1 mol of sodium pyrophosphoric acid and 4 mol of water. That is, the pyrophosphoric acid group in 1 mol is 4 chemical equivalents since the valency of the pyrophosphoric acid group is tetravalent, and the sodium group in 1 mol is 1 chemical equivalent since the valency of the sodium group is monovalent. Thus, chemical equivalents of divalent copper, the tetravalent pyrophosphoric acid group and the like can be calculated from valencies. That is, 1 mol of the pyrophosphoric acid group is 4 chemical equivalents since 1 mol of divalent copper (Cu²⁺) is 2 chemical equivalents and the pyrophosphoric acid group (P₂O₇⁴⁻) is tetravalent.

When the fungicide for agricultural and horticultural use according to the present invention is produced, wettable powders such as surfactants, aggregation inhibitors, inorganic carriers, organic carriers and the like, which are conventionally used for producing pesticides, can be used.

The surfactants used in the present invention may be those conventionally used for producing pesticides, examples of nonionic surfactants including polyoxyethylene alkyl ether, polyoxyethylene alkylallyl ether, polyoxyethylene styrylphenyl ether, polyoxyethylene alkyl ester, polyoxyethylene sorbitan alkylate, polyoxyethylene phenyl ether polymer, polyoxyethylene alkylene allylphenyl ether, polyoxyethylene alkylene glycol, glycerol mono-fatty acid ester (e.g., glycerol monostearate), polyglycerol mono-fatty acid ester, polyglycerol, polyoxyethylene-polyoxypropylene block polymer, fluorochemical surfactant (polyoxyalkylene dimethylpolysiloxane copolymer and the like), acetylene glycol surfactant (2,4,7,9-tetramethyl-decine-4,7-diol and the like) and the like. The nonionic surfactants used in the present invention are not restricted thereto.

In terms of use thereof, there is no problem even if one or more types are used in the formulation in combination, the content of which being not restricted. Based on 100 parts by mass of the total fungicides for agricultural and horticultural use according to the present invention, 0.1-30 parts by mass is preferred, and 0.3-20 parts by mass is more preferred. In the present invention, more than 30 parts by mass of a nonionic surfactant is not preferred since the activity decreases, and less than 0.1 part by mass is not preferred since dispersibility of the inorganic copper compound as well as adhesiveness to plants may become poor.

The anionic surfactants used in the present invention may be those conventionally used for producing pesticides, examples of which surfactants include alkylsulfuric acid or a salt thereof, polyoxyethylene alkyl ether sulfuric acid or a salt thereof, polyoxyethylene benzyl phenyl ether sulfuric acid or a salt thereof, polyoxyethylene-polyoxypropylene block polymer sulfuric acid or a salt thereof, polyoxyalkylene sulfosuccinic acid or a salt thereof (e.g., polyoxyethylene sulfosuccinic acid), dialkylsulfosuccinic acid or a salt thereof, alkylbenzenesulfonic acid or a salt thereof, ligninsulfonic acid or a salt thereof, naphthalenesulfonic acid or a salt/formalin condensate thereof, fatty acid or a salt thereof, resinate, polyoxyethylene alkyl ether phosphoric acid or a salt thereof, polyoxyethylene benzyl phenyl ether phosphoric acid or a salt thereof, alkylphosphoric acid or a salt thereof and the like. The anionic surfactants used in the present invention are not restricted thereto.

In terms of use thereof, there is no problem even if one or more types are used in the formulation in combination, the content of which being not restricted. Based on 100 parts by mass of the total fungicides for agricultural and horticultural use according to the present invention, 0.1-30 parts by mass is preferred, and 0.3-20 parts by mass is more preferred. In the present invention, more than 30 parts by mass of an anionic surfactant is not preferred since the activity decreases, and less than 0.1 part by mass is not preferred since dispersibility of the inorganic copper compound as well as adhesiveness to plants may become poor.

As a surfactant used in the present invention, there is no problem even if a cationic surfactant and/or an amphoteric surfactant are used, as long as the formulation does not exhibit insolubility of a part thereof and decrease of the effect.

The inorganic carriers which can be used in the -present invention may be those conventionally used for producing pesticides, examples of which inorganic carriers include clay, diatomaceous earth, bentonite, talc, zeeklite, sericite, acid clay, silica stone, pumice, zeolite, vermiculite, white carbon, glassy powder obtained by grinding Shirasu-balloons, and the like. Examples of the organic carriers include pulp, hull, starch, lactose and the like, although the organic carriers are not restricted thereto.

Auxiliary components which can be used in the fungicide for agricultural and horticultural use according to the present invention are not restricted to those described above, and other auxiliary components conventionally used for producing pesticides can, needless to say, also be used.

The fungicide for agricultural and horticultural use according to the present invention comprising an inorganic copper compound as an active component has control effects also against plant diseases caused by molds (filamentous bacteria), in addition to plant diseases caused by bacteria. Similarly, the fungicide according to the present invention for agricultural and horticultural use can also be used as seed disinfectants for seeds of cereals such as wheat, barley and the like and pulses; seeds of vegetables such as cucumber, tomato, lettuce and spinach; seeds of flowers and ornamental plants such as pansy and morning glory; and seed tubers of root crops such as seed potato. Thus, the fungicide according to the present invention for agricultural and horticultural use also includes seed disinfectants.

Examples of plant diseases, to which it is appropriate to apply the fungicide according to the present invention for agricultural and horticultural use comprising an inorganic copper compound as an active component, include tomato late blight, tomato leaf mold, tomato downy mildew, cucumber downy mildew, cucumber anthracnose, cucumber powdery mildew, pear fruit spot, pear black spot, apple black spot, apple blotch, persimmon leaf spot, persimmon anthracnose, grape anthracnose, grape leaf blight, grape ripe rot, grape downy mildew, mandarin orange scab, citrus melanose, mandarin orange melanose, watermelon anthracnose, cabbage downy mildew, cabbage sclerotinia rot, potato late blight, onion downy mildew, onion alternaria leaf spot and the like.

As required, it is possible to use active pesticide ingredients other than inorganic copper compounds, stabilizers for active pesticide ingredients, stabilizing agents, organic solvents, fungicides/antiseptics, pH adjustors, bonds and extenders such as inorganic carriers and organic carriers in the fungicide according to the present invention for agricultural and horticultural use.

Examples of the active pesticide ingredients other than inorganic copper compounds include the following.

Examples of insecticides include MEP, malathion, DDVP, acephate, DEP, NAC, cartap, tetradifon and the like.

Examples of fungicides include fthalide, metalaxyl, pefurazoate, kasugamycin, validamycin, oxolinic acid, imibenconazole, ipconazole and the like.

The active pesticide ingredients used in the present invention are not restricted to these examples, and other various insecticides and fungicides can be used in combination.

Examples of the fungicides/antiseptics, which can be used in combination with the fungicide according to the present invention for agricultural and horticultural use, include sorbic acid, potassium sorbate, parachlorometaxylenol (4-chloro-3,5-dimethylphenol), butyl parahydroxybenzoate and the like. As required, antioxidants, UV inhibitors, crystallization inhibitors and the like may be added as the stabilizers for the active pesticide ingredients.

Examples of the organic solvents which can be used include petroleums, animal oils, vegetable oils and the like and, as pH adjustors, those conventionally used such as calcium carbonate, magnesium carbonate, sodium hydroxide, phosphoric acid, hydrochloric acid and citric acid may be added as required.

Examples of the bonds include those derived from natural products and synthetic substances, the former including saccharides such as dextrin, cellulose, methyl cellulose, ethyl cellulose, carboxymethyl cellulose, hydroxymethyl cellulose, hydroxyethyl cellulose, hydroxypropyl cellulose, starch, carboxymethyl starch, pullulan, sodium alginate, ammonium alginate, dextran, mannan, pectin, tragacanth gum, mannitol, sorbitol, propylene glycol alginate, guar gum, locust bean gum, gum arabic and xanthan gum and proteins such as gelatin and casein, and the latter including such as polyvinyl alcohol, polyethylene oxide, polyethylene glycol, ethylene-propylene block polymer, sodium polyacrylate, polyvinylpyrrolidone. The bonds used in the present invention are not restricted to these examples.

The fungicide according to the present invention for agricultural and horticultural use comprising an inorganic copper compound as an active component may be produced as a conventional solid formulation used after dilution with water. Examples thereof include wettable powders, dry flowables (also referred to as water dispersible granules or water dispersible grains) and tablets, although not restricted thereto.

### Examples

The present invention will now be described in more detail referring to Examples and Comparative Examples thereof. However, the present invention is not restricted thereto. The term "parts" means parts by mass in all cases. "%" means % by mass.

### Synthesis Example 1

### Synthesis of the polymer thickener A containing sulfonyl group [a copolymer of sodium 2-acrylamido-t-butylsulfonate/sodium acrylate/acrylic acid (composition ratio (mol%): 50/25/25, molecular weight: 1,900,000)].

To a 1L separable flask, 146.8 g of a 50% aqueous solution of sodium 2-acrylamido-2-methylpropanesulfonate, 41.9 g of a 36% aqueous solution of sodium acrylate, 11.5 g of acrylic acid and 299.8 g of deionized water were added, and mixed to prepare an aqueous monomer mixture solution. The atmosphere of this separable flask was replaced with nitrogen for 1 hour, while stirring the content thereof at 300 rpm. This separable flask was then controlled to be 45°C, and 0.05 g of a 3% aqueous solution of t-butyl hydroxy peroxide, 0.2 g of a 10% aqueous solution of sodium persulfate, and 0.06 g of a 5% aqueous solution of sodium isoascorbate were added to initiate polymerization.
Thereafter, this separable flask was kept at 45°C for 1 hour, and polymerization was terminated by keeping thereof at 60°C for 1.5 hours, at 70°C for 1 hour and then at 85°C for 2.5 hours. During the reaction, 167 g of deionized water as well as 0.3 g of a 10% aqueous solution of sodium persulfate were added when heating the flask to 70°C, and 0.3 g of a 10% aqueous solution of sodium persulfate was added when the temperature rose to 85°C.
After the polymerization, the flask was cooled to 60°C to take out polymers. Thus, the polymer thickener A containing sulfonyl group (whose molecular weight was 1,900,000 based on measurement by GPC) with the solids concentration of 16% was obtained.

### Synthesis Example 2

### Synthesis of the polymer thickener B containing sulfonyl group [a copolymer of sodium 2-acrylamido-t-butylsulfonate/sodium acrylate/acrylic acid (composition ratio (mol%): 50/25/25, molecular weight: 1,400,000)].

In a 5L separable flask, 763.4 g of a 50% aqueous solution of sodium 2-acrylamido-2-methylpropanesulfonate, 217.5 g of a 36% aqueous solution of sodium acrylate, 60 g of acrylic acid and 1848.1 g of deionized water were mixed to prepare an aqueous monomer mixture solution. The atmosphere of this separable flask was replaced with nitrogen for 1 hour, while stirring the content thereof at 300 rpm. This separable flask was then controlled to be 45°C, and 0.867 g of a 3% aqueous solution of t-butyl hydroxy peroxide, 2.6 g of a 10% aqueous solution of sodium persulfate, and 1.04 g of a 5% aqueous solution of sodium isoascorbate were added to initiate polymerization.
Thereafter, temperature of this separable flask was raised stepwise to 85°C for 3 hours, and was then kept at 85°C for 3 hours to polymerize.
During the heating, 3.12 g of a 10% aqueous solution of sodium persulfate was added.
After the polymerization, 5.2 g of a 10% aqueous solution of sodium bisulfite was added.
After the polymerization, the flask was cooled to 60°C to take out polymers. Thus, the polymer thickener B containing sulfonyl group (whose molecular weight was 1,400,000 based on measurement by GPC) with the solids concentration of 18.8% was obtained.

### Example 1

In a Henschel mixer, 35.6 parts of anhydrous copper sulfate, 32.6 parts of anhydrous sodium pyrophosphate, 5 parts of the polymer thickener A containing sulfonyl group, 8 parts of polyoxyethylene sulfosuccinate, 1 part of glycerin monostearate, 15.8 parts of white carbon and 2 parts of clay were mixed and milled to obtain the fungicide according to the present invention for agricultural and horticultural use.

### Example 2

In a Henschel mixer, 35.6 parts of anhydrous copper sulfate, 32.6 parts of anhydrous sodium pyrophosphate, 5 parts of the polymer thickener B containing sulfonyl group, 8 parts of polyoxyethylene sulfosuccinate, 1 part of glycerin monostearate, 15.8 parts of white carbon and 2 parts of clay were mixed and milled to obtain the fungicide according to the present invention for agricultural and horticultural use.

### Comparative Example 1

A comparative formulation was obtained by preparation in a manner similar to Example 1 except that Aronbis-MS (sodium polyacrylate: a trade name of a product commercially available from Toagosei Co., Ltd.) was used instead of the polymer thickener A containing sulfonyl group prepared in Example 1.

### Comparative Example 2

A comparative formulation was obtained by preparation in a manner similar to Example 1 except that Rheogic 250H (a copolymer of acrylic acid/sodium acrylate: a trade name of a product commercially available from Nihon Junyaku Co., Ltd.) was used instead of the polymer thickener A containing sulfonyl group prepared in Example 1.

### Comparative Example 3

A comparative formulation was obtained by preparation in a manner similar to Example 1 except that Rheogic 835H (a cross-linked copolymer of sodium acrylate/acrylamide: a trade name of a product commercially available from Nihon Junyaku Co., Ltd.) was used instead of the polymer thickener A containing sulfonyl group prepared in Example 1.

### Comparative Example 4

A comparative formulation was obtained by preparation in a manner similar to Example 1 except that Serogen PR (the sodium salt of carboxymethylcellulose: a trade name of a product commercially available from Daiichi Pharmaceutical Co., Ltd.) was used instead of the polymer thickener A containing sulfonyl group prepared in Example 1.

### Comparative Example 5

A comparative formulation was obtained by preparation in a manner similar to Example 1 except that Rhodigel SM (xanthan gum: a trade name of a product commercially available from Rhodia Inc.) was used instead of the polymer thickener A containing sulfonyl group prepared in Example 1.

### Comparative Example 6

A comparative formulation was obtained by preparation in a manner similar to Example 1 except that the polymer thickener A containing sulfonyl group was excluded.

### Comparative Example 7

Z-Bordeaux (produced by Tomono Agrica) was used as a comparative formulation.

Test Examples are shown below in order to describe more specifically the effects with which, in comparison to the conventional copper formulations, control effects against plant diseases are enhanced and higher control effects are exhibited.

### Test Example 1

A test for the control effect against cucumber downy mildew
Sufficient amounts of the test formulations prepared in Examples 1-2 and Comparative Examples 1-6, which were 1500-fold diluted with water, and the formulation of Comparative Example 7, which was 500-fold diluted with water, were sprayed on both sides of first true leaves of cucumbers (variety: Sharp 1, 1.2-1.5 leaf stage) using a battery-powered sprayer. After leaving the cucumbers to stand in a green house at 20°C for 1 day, zoosporangia suspension (5 x 10⁴ zoosporangia/ml) of *Pseudoperonospora cubensis* (cucumber downy mildew fungus) was spray-inoculated uniformly over the reverse sides of the first true leaves to cause the disease in the greenhouse at 20°C. Six days after inoculation, the diseased area ratios (%) of the first true leaves were surveyed to calculate the preventive values (%) in comparison with the non-treated group. The result thereof is shown in Table 1.

### Test Example 2

A test for the control effect against tomato late blight
Sufficient amounts of the test formulations prepared in Examples 1-2 and Comparative Examples 1-6, which were 1500-fold diluted with water, and the formulation of Comparative Example 7, which was 500-fold diluted with water, were sprayed on leaves of tomatoes (variety: Momotaro, 3-4 leaf stage) using a battery-powered sprayer. After leaving the tomatoes to stand in a green house at 20°C for 1 day, zoosporangia suspension (5 x 10⁴ zoosporangia/ml) of *Phytoplatora infestans* (tomato late blight fungus) was spray-inoculated over the leaves to cause the disease in the greenhouse at 20°C. Three days after inoculation, the diseased area ratios (%) of the first true leaves and the second true leaves were surveyed to calculate the preventive values (%) in comparison with the non-treated group. The result thereof is shown in Table 1.

### Test Example 3

A test for the control effect against cucumber anthracnose
Sufficient amounts of the test formulations prepared in Examples 1-2 and Comparative Examples 1-6, which were 1500-fold diluted with water, and the formulation of Comparative Example 7, which was 500-fold diluted with water, were sprayed on both sides of the first true leaves of cucumbers (variety: Sagami-Hanjiro, 1.2-1.5 leaf stage) using a battery-powered sprayer. After leaving the tomatoes to stand in a green house at 25°C for 1 day, conidia suspension (6 x 10⁵ conidia/ml) of *Colletotrichum lagenarium* (cucumber anthracnose fungus) was spray-inoculated over the reverse sides of the first true leaves to cause the disease in the greenhouse at 25°C. Five days after inoculation, the diseased area ratios (%) of the first true leaves were surveyed to calculate the preventive values (%) in comparison with the non-treated group. The result thereof is shown in Table 1.

### Test Example 4

A test for the control effect against cucumber powdery mildew
Condia were inoculated uniformly over the surfaces of the first true leaves of cucumbers (variety: Sagami-Hanjiro, 1 leaf stage) using diseased leaves where the condia of *Sphaerotheca fuliginea* (cucumber powdery mildew fungus) were sufficiently formed. When lesions were sufficiently formed after leaving the cucumber plants to stand in a green house at 25°C to cause the disease, sufficient amounts of the test formulations prepared in Examples 1-2 and Comparative Examples 1-6, which were 1500-fold diluted with water, and the formulation of Comparative Example 7, which was 500-fold diluted with water, were sprayed on the surface of the first true leaves using a battery-powered sprayer, followed by growing the cucumber plants in a green house at 25°C. Seven days later, the diseased area ratios (%) of the first true leaves were surveyed to calculate the preventive values (%) in comparison with the non-treated group. The result thereof is shown in Table 1.

**[Table 1]**

| | Preventive Value (%) | | | |
|---|---|---|---|---|
| | Test Example 1 | Test Example 2 | Test Example 3 | Test Example 4 |
| Formulation Tested | Cucumber Downy Mildew | Tomato Late Blight | Cucumber Anthracnose | Cucumber Powdery Mildew |
| Example 1 | 90 | 97 | 95 | 95 |
| Example 2 | 86 | 92 | 91 | 90 |
| Comparative Example 1 | 46 | 67 | 69 | 75 |
| Comparative Example 2 | 52 | 72 | 70 | 75 |
| Comparative Example 3 | 45 | 74 | 68 | 70 |
| Comparative Example 4 | 73 | 73 | 67 | 75 |
| Comparative Example 5 | 60 | 70 | 65 | 70 |
| Comparative Example 6 | 50 | 71 | 60 | 70 |
| Comparative Example 7 | 48 | 60 | 56 | 63 |

### INDUSTRIAL APPLICABILITY

The fungicide for agricultural and horticultural use according to the present invention has enhanced plant disease-control effects and exhibits higher control effects in comparison to the conventional copper formulations.

## Claims

1. A fungicide for agricultural and horticultural use, which comprises an inorganic copper compound and a polymer thickener having a sulfonyl group.

2. The fungicide for agricultural and horticultural use according to claim 1, wherein the average molecular weight of said polymer thickener comprising a sulfonyl group is 500,000-3,000,000.

3. The fungicide for agricultural and horticultural use according to claim 1 or 2, wherein a monomer of said polymer thickener comprising a sulfonyl group comprises 2-acrylamide-t-butylsulfonic acid.

4. The fungicide for agricultural and horticultural use according to any one of claims 1 to 3, wherein said polymer thickener comprising a sulfonyl group is a copolymer of sodium 2-acrylamide-t-butylsulfonic acid/sodium acrylate/acrylic acid.

5. The fungicide for agricultural and horticultural use according to any one of claims 1 to 4, wherein said inorganic copper compound is at least one selected from the group consisting of basic copper chloride, basic copper sulfate, basic copper carbonate, copper sulfate and copper (II) hydroxide.

6. The fungicide for agricultural and horticultural use according to claim 5, wherein said inorganic copper compound is copper sulfate.

7. The fungicide for agricultural and horticultural use according to any one of claims 1 to 6, further comprising polyphosphate.

8. The fungicide for agricultural and horticultural use according to any one of claims 1 to 7, comprising a divalent copper compound and a polyphosphate group, wherein the amount of said polyphosphate group is more than 1 chemical equivalent and no more than 4 chemical equivalents per 1 chemical equivalent of said divalent copper compound.
